# FASCICULE DE BREVET EUROPEEN

(11) **EP 3 411 550 B1**
(45) Date de publication et mention de la délivrance du brevet: **29.04.2020**
(21) Numéro de dépôt: 17764426.7
(22) Date de dépôt: 22.08.2017
(51) Int. Cl.: E05F 15/42, B60J 10/86, B60Q 3/217, B60Q 3/41, B60Q 3/78

(54) **DISPOSITIF DE SIGNALÉTIQUE DU FONCTIONNEMENT D'UNE PORTE À VENTAUX**
ANZEIGEVORRICHTUNG FÜR DEN BETRIEB EINER MEHRFLÜGELIGEN TÜR
DISPLAY DEVICE FOR THE OPERATION OF A MULTI-LEAFED DOOR

(30) Priorité: 01.09.2016 FR 1658127
(43) Date de publication de la demande: 12.12.2018
(73) Titulaire: Etablissements L.Rustin, 72340 La Chartre-Sur-Le-Loir (FR)
(72) Inventeur: RUSTIN, Louis Alain, 72340 La Chartre Sur Le Loir (FR)
(74) Mandataire: Ipside
(86) Numéro de dépôt international: PCT/FR2017/052254
(87) Numéro de publication internationale: WO 2018/042103

(56) Documents cités:
- EP-A2- 2 018 996
- DE-A1-102010 019 764
- FR-A1- 2 886 238
- US-A1- 2002 126 498

## Description

### DOMAINE TECHNIQUE DE L'INVENTION

L'invention se trouve à l'interface entre les domaines de la signalisation et de la sécurité des individus passant d'un espace à un autre via une porte d'accès. Plus particulièrement l'invention s'intéresse au domaine du transport ferroviaire de voyageurs, comme le train ou le métro, les gares et les stations, lesquels comprennent de nombreuses portes généralement coulissantes permettant aux passagers de monter et descendre des voitures. Ces portes sont munies de nombreuses garnitures en élastomère constituant autant de joints notamment sur les bords verticaux des ventaux qui viennent en contact lors de la fermeture des portes ou sur les bâtis. On trouve aussi ces joints autour vitres des portes et des voitures.

L'invention vise encore à offrir de nouveaux joints en caoutchouc capables de remplacer ces garnitures en élastomère et capables d'assurer l'étanchéité des portes et vitres et aussi de fournir un support de signalisation sur le fonctionnement des portes.

### ÉTAT DE LA TECHNIQUE

Les moyens de transport ferroviaire, surtout les métros et trains de banlieues transportent dans les villes du monde entier des millions de passagers dont la sécurité et l'information doivent être assurées dans des conditions difficiles, s'agissant d'un milieu confiné où les matériaux utilisés doivent répondre à des normes drastiques, notamment en rapport avec les risques d'incendies. Notamment ne pas dégager de vapeurs toxiques en cas d'incendie ou même d'usure, et ne pas générer de particules nocives en rapport de façon à préserver autant que possible la qualité de l'air ambiant. En outre, la signalisation doit être claire, perceptible par le plus grand nombre d'individus quelle que soit leur position dans les voitures ou sur le quai.

De plus, les équipements doivent être pensés pour faciliter la maintenance, tant au niveau de la réparation que du remplacement, pour limiter les risques de pannes et raccourcir les durées d'immobilisations.

En matière de sécurité, les quais sont aujourd'hui de plus en plus munis de portes palières visant à éviter la chute d'individus qu'elle soit accidentelle, par suicide ou malveillance, mais aussi d'objets qui conduisent des personnes à descendre sur les voies avec les risques et retards que cela induit, sans compter le somme de détritus que ces façades de quai empêchent de jeter sur les voies en facilitant de ce fait l'entretien.

Les portes des voitures et de façades de quais constituent donc un des éléments clés puisqu'elles sont sources de danger et sont soumises à des contraintes d'ouverture et de fermeture intenses et donc susceptibles de nombreuses pannes ou dysfonctionnements.

Ces portes comprennent un ou plusieurs ventaux coulissant, glissant ou louvoyant, actionné par des mécanismes du type de celui décrit dans le brevet français No. 3 003 289. Ils sont associés à une platine électronique reliée à une borne de détection qui en cas de problème peut provoquer par coupe-circuit le blocage du système. Ces portes sont munies de garnitures en élastomère dont le but est d'assurer l'étanchéité de la porte, au niveau des ventaux et du bâti, et la sécurité des passages grâce à une certaine élasticité qui atténue les pincements, ou par la présence de dispositif coupe-circuit pour prévenir le coincement d'objets ou de passagers.

Ainsi, il existe divers dispositifs associés à ces portes, parmi ceux-ci on peut citer les baguettes profilées décrites dans le brevet européen No. 2 174814 comprenant un logement flexible dans lequel est placé un capteur électrique ou encore le joint proposé dans le brevet français No. 3 008 035 possédant une chambre dans laquelle est placé un élément commutant. On connaît aussi les ensembles de joints mâle et femelle, proposés dans le brevet européen No. 2 243 678 où le joint mâle comprend un capteur de pression.

Ces joints sont soit fixés directement sur la porte, ou via un profilé, présentant des formes complémentaires de la partie d'accrochage du profilé comme décrit dans le brevet français No. 3 025 164.

Par ailleurs, les portes comprennent une signalétique minimale, généralement sous la forme d'un signal sonore, accompagnée d'une lumière rouge clignotante, qui précède la fermeture. Dans certains cas, les entreprises de transport ont des équipes sur les quais qui informent, par des instructions et une gestuelle adaptée, les usagers qu'ils doivent attendre la descente des passagers pour monter dans les voitures et qu'ils ne doivent plus monter du fait de l'imminence de la fermeture des portes. On connait dans d'autres domaines que ceux du transport des dispositifs d'information de la fermeture ou de l'ouverture de portes d'accès. Il s'agit de dispositifs associés à des dalles de verre et dispensant des effets lumineux en trois couleurs R-V-B, par exemple proposé dans le brevet européen No. 1 746 243.

Le document DE102010019764 A1 montre un dispositif signalétique comprenant un joint et une source lumineuse.

### OBJECTIFS DE L'INVENTION

Ces systèmes d'effets lumineux sont fragiles et donc pas adaptés à l'environnement exigeant des transports en commun, qui pourtant mériterait un peu d'animation pour égayer la vie des usagers.

Le but de la présente invention est précisément d'offrir un nouveau système de communication qui soit adapté aux contraintes des transports en commun. Dans cette perspective, un autre but de la présente invention est d'offrir un profilé en élastomère capable de laisser passer la lumière, répondant aux normes exigées par les autorités pour les moyens de transport collectif en milieu clos et donc susceptible de remplacer tout ou partie des joints en élastomère noir rencontrés sur les portes des voitures ou sur les rebords des vitres de portes ou même des voitures.

### EXPOSÉ DE L'INVENTION

Ce but et d'autres rapportés ci-après, sont atteints grâce à un profilé en élastomère translucide mis au point par la Demanderesse grâce à ses connaissances en matière de caoutchouc. Il s'agit d'un élastomère silicone malaxable et vulcanisable à chaud qui est transparent de façon à laisser passer la lumière. Cette transparence peut être modulée par l'addition de divers additifs, bien connus dans la chimie des silicones, pour conférer au profilé en élastomère un aspect plus ou moins translucide, par exemple laiteux, blanc porcelaine, ou teinté dans la masse dans diverses couleurs ou encore avec des effets par exemple de pigmentations.

Ce profilé en élastomère translucide répond à la norme EN45-545 classement R22 HL3 et R23 HL3.

Ainsi ce nouvel élastomère permet de protéger une source de lumière utile pour la signalétique dans les transports en commun.

La présente invention concerne donc tout particulièrement un dispositif de signalétique du fonctionnement d'une porte à un vantail ou plusieurs ventaux, selon la revendication 1.

Cette protection assure la longévité et la visibilité de la source lumineuse et n'est possible que grâce au caractère translucide du profilé, qui présente en outre la robustesse requise pour assurer la fonction de joint entre les portes.

Selon une forme généralement rencontrée au niveau de la jonction des portes lors de la fermeture, le profilé en élastomère translucide constitue tout ou partie du couple formé d'un joint mâle et d'un joint femelle venant en contact lorsque la porte est fermée. Mais le profilé de l'invention peut remplacer toute autre forme de joint.

Toutes les installations de sécurité comprenant un système de détection d'un objet ou d'un individu coincé dans la porte utilisées dans l'art antérieur sont compatibles avec le profilé en élastomère translucide de l'invention.

Parmi ceux-ci, l'invention envisage plus particulièrement un système de détection du type dans lequel le joint comporte un capteur de déformation, comme un capteur de pression. Celui-ci est généralement dans le joint mâle de l'ensemble de joint, il est relié par un câble à une borne de détection qui en cas d'incident permet l'arrêt de la fermeture de la porte ou même l'arrêt du véhicule de transport comme une rame de métro ou de train.

La source de lumière est disposée sur les bords du bâti et/ou des ventaux de la porte au niveau de la fixation du profilé en élastomère. Dans tous les cas, le profilé en élastomère translucide protège la source de lumière des chocs et de l'encrassement.

Généralement, on préfère disposer la source de lumière sur le bâti de la porte via un support, comme un rail en aluminium, où l'on vient accrocher le joint, la source de lumière se présentant sous la forme d'un bandeau qui est placé au fond d'une rainure par-dessus laquelle on vient accrocher le joint en élastomère.

Ainsi, le profilé en élastomère translucide est fixé aux bords du bâti et/ou des ventaux de la porte via un support comme un rail en aluminium.

Le dispositif de signalétique selon l'invention comprend avantageusement un diffuseur de lumière placé devant la source de lumière. Ce diffuseur peut être disposé dans le profilé en élastomère transparent ou dans le support du profilé sur le bâti de la porte. En effet, le rôle principal du diffuseur est d'éviter l'effet de pixellisation lié à l'emploi de certaines sources de lumière.

Comme indiqué précédemment, le profilé en élastomère translucide est un élastomère silicone vulcanisable à chaud. Il répond à la norme EN45-545 classement R22 HL 3 et R23. Il peut comprendre un ou plusieurs additifs conférant au profilé en élastomère translucide la capacité de générer des effets de lumières supplémentaires, comme la capacité de diffuser la lumière. Ainsi, si le profilé est teinté par exemple pour donner un effet laiteux, le diffuseur n'est pas nécessaire.

Une autre forme de réalisation du profilé en élastomère consiste à disposer d'un profilé associant au moins deux matières en élastomère différent. Un tel profilé est obtenu de préférence par co-extrusion desdites deux matières afin de former un seul profilé. Cette forme de réalisation permet de conférer des propriétés supplémentaires au profilé en élastomère utilisé selon l'invention, soit en termes de couleur, de texture, de souplesse, etc ...

Un exemple préféré de l'intérêt de la co-extrusion est de remplacer le diffuseur placé devant la source de lumière par un élastomère diffusant la lumière, alors que l'autre matière en élastomère est davantage translucide. Ainsi, le profilé en élastomère comprend une première portion en élastomère diffusant la lumière placée devant la source de lumière et donc présentant un indice de réfraction supérieur à celui de la seconde portion en un élastomère davantage translucide.

Le profilé en élastomère en deux matières répond aux normes en vigueur notamment la norme EN45-545 classement R22 et R23 pour ce qui concerne la résistance au feu et aussi la norme EN45-545 classement R4 pour ce qui concerne les diffuseurs de lumière.

Selon le dispositif de signalétique de l'invention, l'effet de la source de lumière varie pour indiquer l'une au moins des phases de fonctionnement de la porte suivantes :
- l'imminence de l'ouverture de la porte,
- la possibilité de franchir sans danger la porte,
- l'imminence de la fermeture de la porte,
- la fermeture de la porte, un dysfonctionnement de la porte,
- le bon fonctionnement de la porte lorsqu'elle est fermée.

Selon une forme préférée de l'invention, l'effet de la source de lumière est une variation entre au moins deux couleurs, de préférence le rouge et le vert, l'effet de couleur verte indiquant la possibilité de franchir sans danger la porte, l'effet de couleur rouge indiquant un danger.

De manière toute préférée, l'effet de la source de lumière est une variation entre au moins trois couleurs, de préférence le rouge, le vert et le blanc, l'effet de couleur verte indiquant la possibilité de franchir sans danger la porte, l'effet de couleur rouge indiquant un danger, l'effet de couleur blanc indiquant le bon fonctionnement de la porte lorsqu'elle est fermée.

Le dispositif de signalétique de l'invention peut être programmé pour délivrer le cycle d'information suivant :
- lumière blanche : déplacement du véhicule portes bloquées mais en fonctionnement ;
- lumière verte : ouverture de la porte en station (par exemple 4 secondes avant l'ouverture et 4 secondes d'ouverture) ;
- rouge clignotant : fermeture avec activation du système de détection d'un coincement (par exemple 4 secondes) ;
- rouge fixe : départ du véhicule ;
- retour au blanc si pas de détection d'incident, etc...

La source lumière est avantageusement constituée de diodes électroluminescentes (LED). Tout préférentiellement la source lumière est constituée de deux rampes de LED, soit pour que l'une des rampes remplace l'autre lorsqu'elle est défaillante, soit pour augmenter l'intensité de l'effet lumineux, soit pour donner un effet de mouvement à l'effet lumineux, par exemple lors d'une lumière clignotante.

Une autre source de lumière selon l'invention peut être constituée de fibre(s) optique(s) dont il est aussi possible de faire varier l'intensité ou la couleur selon les variations prévues par l'invention.

Un des avantages du profilé en élastomère translucide de l'invention est de pouvoir remplacer tous les joints d'une porte quelle que soit la forme de la porte et son mode de fonctionnement, qu'il s'agisse d'une porte de type à un ou deux ventaux coulissants, ou glissants et louvoyants, automatiques ou semi-automatiques. Le profilé en élastomère translucide de l'invention peut être placé sur tous les bords de la porte, de son bâti ou autour des vitres et ainsi offrir un dispositif de signalétique modulable protégeant parfaitement la source de lumière. On préfère toutefois placer le dispositif de l'invention comme joint sur les ventaux selon l'ensemble joints mâle et femelle qui viennent en contact lors de la fermeture de la porte de façon à ce que l'effet lumineux soit visible par les usagers qui sont des deux côtés de la porte.

Le dispositif de signalétique de l'invention accepte de nombreuses variantes de l'effet lumineux comme des alternances choisies dans le groupe comprenant : des clignotements, des éclairements fixes, l'extinction, pour indiquer l'une au moins des phases de fonctionnement de la porte suivante : l'imminence de l'ouverture de la porte, la possibilité de franchir sans danger la porte, l'imminence de la fermeture de la porte, la fermeture de la porte, un dysfonctionnement de la porte, le bon fonctionnement de la porte lorsqu'elle est fermée.

Le dispositif de signalétique de l'invention peut aussi comprendre, associé à l'effet de la source de lumière, un signal sonore reproduisant par le son tout ou partie des effets de la source de lumière.

L'invention concerne aussi une porte d'un moyen de transport de passagers ou d'accès à un moyen de transport de passagers, munie d'un ou plusieurs dispositifs décrit précédemment, le(s)dit(s) dispositif(s) signalant aux passagers à l'intérieur et à l'extérieur du moyen de transport le passage sans danger entre le quai et le moyen de transport. L'invention concerne encore un moyen de transport de passagers comportant une ou plusieurs de ces portes identiques ou différentes.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- la figure 1 représente une porte à deux ventaux d'un véhicule de transport en commun en position fermée ;
- la figure 2 illustre la partie mâle d'un joint en élastomère transparent monté sur un ventail d'une porte.

### DESCRIPTION DÉTAILLÉE DE MODES DE RÉALISATION DE L'INVENTION

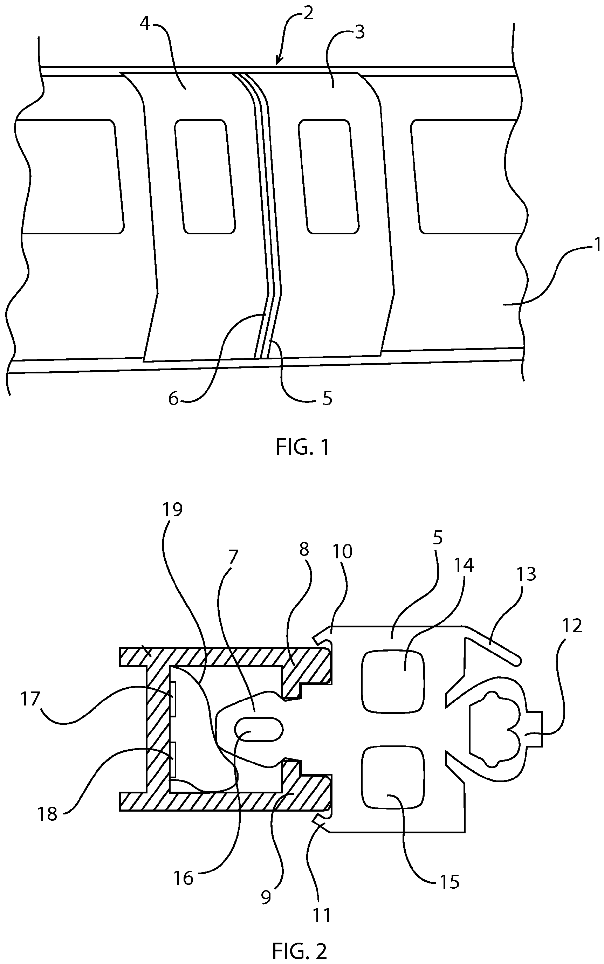

La figure 1 représente la portion d'une voiture 1 d'un véhicule de transport public, comme une rame de métro, comprenant une porte 2 à deux ventaux 3 et 4. Cette porte 2 est animée par un mécanisme habituel dans les véhicules de transport public selon la cinématique de la porte. Dans l'exemple de la figure 1, il s'agit d'une porte louvoyante et glissante. Chacun des ventaux 3 et 4 comporte sur son bord intérieur un joint 5 et 6, l'un mâle l'autre femelle, formant l'étanchéité de la porte 2 lorsque celle-ci est fermée. Les joints 5 et 6 sont entièrement constitués du profilé en élastomère translucide selon l'invention. Ces joint sont visibles de l'intérieur et de l'extérieur de la voiture de façon à ce que les effets lumineux qu'ils expriment soient visibles par le plus de passagers possible.

Lorsque la rame circule, le dispositif de signalétique comprenant lesdits joints 5 et 6 est éclairé en blanc. Une fois dans la station, les portes s'ouvrent et la lumière passe au vert pendant environ quatre secondes. Puis la lumière clignote rouge pour prévenir les passagers sur le quai et dans la rame que les portes vont se fermer et passe au rouge fixe lorsque la rame redémarre avant de se remettre en blanc s'il n'y a pas eu d'incident. Le système de détection, non représenté sur la figure, se déclenche si lors de la fermeture quelque chose se coince entre les portes, et la signalétique du dispositif de l'invention reste au rouge.

Dans le cas d'une porte qui ne fonctionne pas, la signalétique portée par cette porte demeure en rouge pour informer les passagers que cette porte ne peut pas être utilisée en station.

La figure 2 représente une vue en coupe de la partie mâle 5 d'un joint qui est constituée par le profilé en élastomère translucide de l'invention. Il s'agit d'un joint d'une forme que l'on rencontre souvent dans le domaine des véhicules de transport. La partie femelle 6 du joint (non représentée sur la figure 2) présente une forme complémentaire et est aussi constituée par le profilé en élastomère translucide de l'invention.

Les profilés male 5 et femelle 6 en élastomère sont en élastomère silicone vulcanisable à chaud répondant à la norme EN45-545 classement R22 HL 3.

Ils sont fabriqués par des techniques classiques à partir de caoutchouc par extrusion creuse et/ou pleine plus ou moins spongieuse selon le degré de compressibilité recherchée. Ils sont coupés aux dimensions désirées puis accrochés sur les bords intérieurs de ventaux de la porte. Le profilé 5 est fixé sur le bord intérieur du ventail 3 par l'intermédiaire d'un support constitué par un rail en aluminium lui-même fixé sur le bord du ventail par tout moyen d'accroche (non représenté sur la figure 2).

Le profilé 5 est d'un côté maintenu sur son support grâce à sa première protubérance 7 qui est insérée dans un logement 8 prévu à cet effet dans le support. Cette première protubérance est coincée contre des appuis 8 et 9 du support. L'accrochage est renforcé par les pattes 10 et 11 du profilé reposant sur la partie extérieure du support. Le profilé 5 comporte du côté opposé à la première protubérance une seconde protubérance 12 constituant la partie mâle du joint et destinée à venir en appui sur la partie femelle du joint non représentée sur la figure 2. A proximité de cette seconde protubérance 12, le profilé comporte une languette 13 participant au capteur de pression et coopérant avec le système de détection (non représentée sur la figure 2) d'un objet coincé entre les parties mâle et femelle du joint lorsque la porte est fermée et que les ventaux viennent en contact via les profilés constituant le joint.

Le profilé 5 comporte trois chambres vides 14, 15 et 16 qui contribuent à la compressibilité du joint.

Dans un exemple de réalisation non représenté à la figure 2 et qui ne fait pas partie de l'invention, ces chambres pourraient contenir les sources de lumière du dispositif de l'invention. Dans le cas de la figure 2, la source de lumière 17 et 18 est placée au fond du support. Elle se présente sous la forme de deux rampes de LED rouge, vert et blanc (RVB). De façon à éviter la pixellisation de la lumière dans le profilé en élastomère translucide, on a placé un diffuseur 19 devant les rampes de LED RVB. Ce diffuseur 19 est coincé entre la première protubérance 7 et les parois intérieures du support.

Comme cela apparaît de la figure 2, un avantage majeur du dispositif de l'invention, outre le fait qu'il fait office de joint et qu'il signale le fonctionnement de la porte, est d'être facile à monter, à remplacer et à entretenir, tant au niveau de la source de lumière 17 que du diffuseur 19 que du profilé 5.

## Revendications

1. Dispositif de signalétique du fonctionnement d'une porte (2) à un vantail ou plusieurs ventaux (3, 4), du type comportant des joints (5, 6) en élastomère, **caractérisé en ce que** ledit dispositif comprend un profilé élastomère translucide en silicone vulcanisable à chaud constituant la totalité dudit joint (5, 6), un support longitudinal de fixation dudit joint (5, 6) et au moins une source de lumière (17, 18) dont l'effet varie lors des différentes phases de fonctionnement de la porte (2), le profilé élastomère translucide en silicone vulcanisable à chaud étant partiellement inséré dans le support longitudinal de fixation et assurant en outre la protection de ladite source de lumière (17, 18) placée entre ledit support longitudinal et ledit joint (5,6).

2. Dispositif de signalétique selon la revendication 1, **caractérisé en ce que** le profilé élastomère translucide en silicone vulcanisable à chaud (5, 6) comporte au moins une première protubérance (7) qui est insérée dans un logement (8, 9) prévu à cet effet dans le support.

3. Dispositif de signalétique selon l'une des revendications 1 à 2, **caractérisé en ce que** le profilé élastomère translucide en silicone vulcanisable à chaud (5, 6) comporte des pattes (10, 11) d'accrochage reposant sur l'extérieur du support.

4. Dispositif de signalétique selon l'une des revendications 1 à 3, **caractérisé en ce qu'**il comporte un système (13) de détection de la présence d'un objet coincé dans la porte.

5. Dispositif de signalétique selon la revendication 4, **caractérisé en ce que** ledit système de détection est une languette (13) formant un capteur de pression.

6. Dispositif de signalétique selon l'une quelconque des revendications précédentes, **caractérisé en ce que** le profilé élastomère translucide en silicone vulcanisable à chaud (5, 6) comporte trois chambres vides (14, 15, 16) qui contribuent à la compressibilité du joint.

7. Dispositif de signalétique selon l'une quelconque des revendications précédentes, **caractérisé en ce qu'**il comprend devant la source de lumière (17, 18) un diffuseur de lumière (19).

8. Dispositif de signalétique selon l'une quelconque des revendications précédentes, **caractérisé en ce que** le profilé en élastomère associe au moins deux matières en élastomère différent.

9. Dispositif de signalétique selon la revendication 7, **caractérisé en ce que** le profilé en élastomère comprend une première matière en élastomère diffusant la lumière placée devant la source de lumière et une seconde matière en élastomère davantage translucide.

10. Dispositif de signalétique selon l'une quelconque des revendications précédentes, **caractérisé en ce que** le profilé en élastomère translucide est un élastomère silicone vulcanisable à chaud comprenant un additif conférant au profilé en élastomère translucide la capacité de diffuser la lumière.

11. Dispositif de signalétique selon l'une quelconque des revendications précédentes, **caractérisé en ce que** le profilé en élastomère translucide présente un aspect plus ou moins translucide, laiteux, blanc porcelaine ou teinté dans la masse dans diverses couleurs ou avec des effets de pigmentations.

12. Dispositif de signalétique selon l'une quelconque des revendications précédentes, **caractérisé en ce que** l'effet de la source de lumière (17, 18) varie pour indiquer l'une au moins des phases de fonctionnement de la porte (2) suivantes : l'imminence de l'ouverture de la porte (2), la possibilité de franchir sans danger la porte (2), l'imminence de la fermeture de la porte (2), la fermeture de la porte (2), un dysfonctionnement de la porte (2), le bon fonctionnement de la porte (2) lorsqu'elle est fermée.

13. Dispositif de signalétique selon l'une quelconque des revendications précédentes, **caractérisé en ce que** l'effet de la source de lumière (17, 18) est une variation entre au moins deux couleurs, de préférence le rouge et le vert, l'effet de couleur verte indiquant la possibilité de franchir sans danger la porte (2), l'effet de couleur rouge indiquant un danger.

14. Dispositif de signalétique selon l'une quelconque des revendications précédentes, **caractérisé en ce que** l'effet de la source de lumière (17, 18) est une variation entre au moins trois couleurs, de préférence le rouge, le vert et le blanc, l'effet de couleur verte indiquant la possibilité de franchir sans danger la porte (2), l'effet de couleur rouge indiquant un danger, l'effet de couleur blanc indiquant le bon fonctionnement de la porte (2) lorsqu'elle est fermée.

15. Dispositif de signalétique selon l'une quelconque des revendications précédentes, **caractérisé en ce que** la source lumière (17, 18) est constituée de diodes électroluminescentes.

16. Dispositif de signalétique selon l'une quelconque des revendications précédentes, **caractérisé en ce que** la source de lumière (17, 18) est constituée de deux rampes de LED.

17. Dispositif de signalétique selon l'une quelconque des revendications précédentes, **caractérisé en ce que** la porte (2) est de type à un ou deux ventaux (3, 4) de type coulissant, ou de type glissant et louvoyant.

18. Dispositif de signalétique selon l'une quelconque des revendications précédentes, **caractérisé en ce que** l'effet de la source de lumière (17, 18) comprend des alternances choisies dans le groupe comprenant : des clignotements, des éclairements fixes, l'extinction, pour indiquer l'une au moins des phases de fonctionnement de la porte suivantes : l'imminence de l'ouverture de la porte (2), la possibilité de franchir sans danger la porte (2), l'imminence de la fermeture de la porte (2), la fermeture de la porte (2), un dysfonctionnement de la porte (2), le bon fonctionnement de la porte (2) lorsqu'elle est fermée.

19. Dispositif de signalétique selon l'une quelconque des revendications précédentes, **caractérisé en ce que** l'effet de la source de lumière (17, 18) est associé à un signal sonore reproduisant par le son tout ou partie des effets de la source de lumière (17, 18).

20. Une porte (2) d'un moyen de transport de passagers ou d'accès à un moyen de transport de passagers, **caractérisée en ce qu'**elle est munie d'un ou plusieurs dispositifs de signalétique selon l'une quelconque des revendications 1 à 19, le(s)dit(s) dispositif(s) signalant aux passagers à l'intérieur et à l'extérieur du moyen de transport le passage sans danger entre le quai et le moyen de transport.

21. Un moyen de transport de passagers, **caractérisé en ce qu'**il comporte une ou plusieurs portes (2) selon la revendication 20.

## Patentansprüche

1. Vorrichtung zur Signalisierung der Funktion einer Tür (2) mit einem Türflügel oder mehreren Türflügeln (3, 4) des Typs, der Elastomerdichtungen (5, 6) umfasst, **dadurch gekennzeichnet, dass** die Vorrichtung ein lichtdurchlässiges Elastomerprofil aus heißvulkanisierbarem Silikon, das die Gesamtheit der Dichtung (5, 6) bildet, einen Längsträger zum Befestigen der Dichtung (5, 6) und mindestens eine Lichtquelle (17, 18) umfasst, deren Effekt bei den unterschiedlichen Funktionsphasen der Tür (2) wechselt, wobei das lichtdurchlässige Elastomerprofil aus heißvulkanisierbarem Silikon teilweise in den Befestigungslängsträger eingefügt ist und des Weiteren den Schutz der Lichtquelle (17, 18) sicherstellt, die zwischen dem Längsträger und der Dichtung (5, 6) platziert ist.

2. Signalisierungsvorrichtung nach Anspruch 1, **dadurch gekennzeichnet, dass** das lichtdurchlässige Elastomerprofil aus heißvulkanisierbarem Silikon (5, 6) mindestens einen ersten Vorsprung (7) umfasst, der in eine für diesen Zweck im Träger vorgesehene Aufnahme (8, 9) eingefügt ist.

3. Signalisierungsvorrichtung nach einem der Ansprüche 1 bis 2, **dadurch gekennzeichnet, dass** das lichtdurchlässige Elastomerprofil aus heißvulkanisierbarem Silikon (5, 6) Hakenansätze (10, 11) umfasst, die auf der Außenseite des Trägers ruhen.

4. Signalisierungsvorrichtung nach einem der Ansprüche 1 bis 3, **dadurch gekennzeichnet, dass** sie ein System (13) zum Erkennen des Vorliegens eines in der Tür eingeklemmten Objekts umfasst.

5. Signalisierungsvorrichtung nach Anspruch 4, **dadurch gekennzeichnet, dass** es sich bei dem Erkennungssystem um einen Streifen (13) handelt, der einen Drucksensor bildet.

6. Signalisierungsvorrichtung nach einem der vorstehenden Ansprüche, **dadurch gekennzeichnet, dass** das lichtdurchlässige Elastomerprofil aus heißvulkanisierbarem Silikon (5, 6) drei Hohlkammern (14, 15, 16) umfasst, die zur Komprimierbarkeit der Dichtung beitragen.

7. Signalisierungsvorrichtung nach einem der vorstehenden Ansprüche, **dadurch gekennzeichnet, dass** sie vor der Lichtquelle (17, 18) einen Lichtstreuer (19) umfasst.

8. Signalisierungsvorrichtung nach einem der vorstehenden Ansprüche, **dadurch gekennzeichnet, dass** das Elastomerprofil mindestens zwei unterschiedliche Elastomermaterialien kombiniert.

9. Signalisierungsvorrichtung nach Anspruch 7, **dadurch gekennzeichnet, dass** das Elastomerprofil ein erstes, das Licht streuendes Elastomermaterial, das vor der Lichtquelle platziert ist, und ein zweites, stärker lichtdurchlässiges Elastomermaterial umfasst.

10. Signalisierungsvorrichtung nach einem der vorstehenden Ansprüche, **dadurch gekennzeichnet, dass** es sich bei dem lichtdurchlässigen Elastomerprofil um ein heißvulkanisierbares Silikonelastomer handelt, das ein Additiv umfasst, welches dem lichtdurchlässigen Elastomerprofil die Fähigkeit verleiht, das Licht zu streuen.

11. Signalisierungsvorrichtung nach einem der vorstehenden Ansprüche, **dadurch gekennzeichnet, dass** das lichtdurchlässige Elastomerprofil ein mehr oder weniger lichtdurchlässiges, milchiges, porzellanweißes oder in unterschiedlichen Farben oder mit Pigmentierungseffekten in der Masse gefärbtes Erscheinungsbild aufweist.

12. Signalisierungsvorrichtung nach einem der vorstehenden Ansprüche, **dadurch gekennzeichnet, dass** der Effekt der Lichtquelle (17, 18) wechselt, um mindestens eine der folgenden Funktionsphasen der Tür (2) anzuzeigen: das Bevorstehen des Öffnens der Tür (2), die Möglichkeit, die Tür (2) ohne Gefahr zu durchqueren, das Bevorstehen des Schließens der Tür (2), das Schließen der Tür (2), eine Funktionsstörung der Tür (2), die ordnungsgemäße Funktion der Tür (2), wenn dieselbe geschlossen ist.

13. Signalisierungsvorrichtung nach einem der vorstehenden Ansprüche, **dadurch gekennzeichnet, dass** es sich beim Effekt der Lichtquelle (17, 18) um einen Wechsel zwischen mindestens zwei Farben, vorzugsweise Rot und Grün handelt, wobei der grüne Farbeffekt die Möglichkeit anzeigt, die Tür (2) ohne Gefahr zu durchqueren, wobei der rote Farbeffekt eine Gefahr anzeigt.

14. Signalisierungsvorrichtung nach einem der vorstehenden Ansprüche, **dadurch gekennzeichnet, dass** es sich beim Effekt der Lichtquelle (17, 18) um einen Wechsel zwischen mindestens drei Farben, vorzugsweise Rot, Grün und Weiß handelt, wobei der grüne Farbeffekt die Möglichkeit anzeigt, die Tür (2) ohne Gefahr zu durchqueren, wobei der rote Farbeffekt eine Gefahr anzeigt, wobei der weiße Farbeffekt die ordnungsgemäße Funktion der Tür (2) anzeigt, wenn dieselbe geschlossen ist.

15. Signalisierungsvorrichtung nach einem der vorstehenden Ansprüche, **dadurch gekennzeichnet, dass** die Lichtquelle (17, 18) aus Leuchtdioden besteht.

16. Signalisierungsvorrichtung nach einem der vorstehenden Ansprüche, **dadurch gekennzeichnet, dass** die Lichtquelle (17, 18) aus zwei LED-Leisten besteht.

17. Signalisierungsvorrichtung nach einem der vorstehenden Ansprüche, **dadurch gekennzeichnet, dass** es sich bei der Tür (2) um den Typ mit einem oder zwei Türflügeln (3, 4) vom verschiebbaren Typ oder vom gleitenden und schwenkenden Typ handelt.

18. Signalisierungsvorrichtung nach einem der vorstehenden Ansprüche, **dadurch gekennzeichnet, dass** der Effekt der Lichtquelle (17, 18) Wechselfolgen umfasst, ausgewählt aus der Gruppe umfassend: Blinken, feststehendes Leuchten, Erlöschen, um mindestens eine der folgenden Funktionsphasen der Tür anzuzeigen: das Bevorstehen des Öffnens der Tür (2), die Möglichkeit, die Tür (2) ohne Gefahr zu durchqueren, das Bevorstehen des Schließens der Tür (2), das Schließen der Tür (2), eine Funktionsstörung der Tür (2), die ordnungsgemäße Funktion der Tür (2), wenn dieselbe geschlossen ist.

19. Signalisierungsvorrichtung nach einem der vorstehenden Ansprüche, **dadurch gekennzeichnet, dass** der Effekt der Lichtquelle (17, 18) mit einem Tonsignal kombiniert ist, das alle oder einen Teil der Effekte der Lichtquelle (17, 18) durch Ton wiedergibt.

20. Tür (2) eines Personentransportmittels oder eines Zugangs zu einem Personentransportmittel, **dadurch gekennzeichnet, dass** sie mit einer oder mehreren Signalisierungsvorrichtungen nach einem der Ansprüche 1 bis 19 ausgestattet ist, wobei die Vorrichtung(en) den Personen innerhalb und außerhalb des Transportmittels den gefahrlosen Durchgang zwischen dem Steig und dem Transportmittel signalisieren.

21. Personentransportmittel, **dadurch gekennzeichnet, dass** es eine oder mehrere Türen (2) nach Anspruch 20 umfasst.

## Claims

1. Device for indicating the functioning of a door (2) with one leaf or a plurality of leaves (3, 4), of the type comprising elastomer seals (5, 6), **characterised in that** said device comprises a translucent elastomer profiled strip made from hot-vulcanisable silicone constituting the whole of said seal (5, 6), a longitudinal support for attaching said seal (5, 6) and at least one light source (17, 18) the effect of which varies during the various operating phases of the door (2), the translucent elastomer profiled strip made from hot-vulcanisable silicone being partially inserted in the longitudinal attachment support and furthermore providing the protection of said light source (17, 18) placed between said longitudinal support and said seal (5, 6).

2. Indicator device according to claim 1, **characterised in that** the translucent elastomer profiled strip made from hot-vulcanisable silicone (5, 6) comprises at least one first protuberance (7) that is inserted in a housing (8, 9) provided for this purpose in the support.

3. Indicator device according to any of claims 1 to 2, **characterised in that** the translucent elastomer profiled strip made from hot-vulcanisable silicone (5, 6) comprises attachment lugs (10, 11) resting on the outside of the support.

4. Indicator device according to any of claims 1 to 3, **characterised in that** it comprises a system (13) for detecting the presence of an object jammed in the door.

5. Indicator device according to claim 4, **characterised in that** said detection system is a tongue (13) forming a pressure sensor.

6. Indicator device according to any of the preceding claims, **characterised in that** the translucent elastomer profiled strip made from hot-vulcanisable silicone (5, 6) comprises three void chambers (14, 15, 16) that contribute to the compressibility of the seal.

7. Indicator device according to any of the preceding claims, **characterised in that** it comprises a light diffuser (19) in front of the light source (17, 18).

8. Indicator device according to any of the preceding claims, **characterised in that** the elastomer profiled strip combines at least two different elastomer materials.

9. Indicator device according to claim 7, **characterised in that** the elastomer profiled strip comprises a first light-diffusing elastomer material placed in front of the light source and a second more translucent elastomer material.

10. Indicator device according to any of the preceding claims, **characterised in that** the translucent elastomer profiled strip is a hot-vulcanisable silicone elastomer comprising an additive conferring on the translucent elastomer profiled strip the capacity to diffuse light.

11. Indicator device according to any of the preceding claims, **characterised in that** the translucent elastomer profiled strip has a more or less translucent appearance, milky white, porcelain white or self-coloured in various colours or with pigmentation effects.

12. Indicator device according to any of the preceding claims, **characterised in that** the effect of the light source (17, 18) varies so as to indicate at least one of the following operating phases of the door (2): the imminence of the opening of the door (2), the possibility of passing through the door (2) without danger, the imminence of the closure of the door (2), the closure of the door (2), malfunctioning of the door (2), the correct functioning of the door (2) when it is closed.

13. Indicator device according to any of the preceding claims, **characterised in that** the effect of the light source (17, 18) is a variation between at least two colours, preferably red and green, the green colour effect indicating the possibility of passing through the door (2) without danger, the red colour effect indicating danger.

14. Indicator device according to any of the preceding claims, **characterised in that** the effect of the light source (17, 18) is a variation between at least three colours, preferably red, green and white, the green colour effect indicating the possibility of passing through the door (2) without danger, the red colour effect indicating danger, the white colour effect indicating the correct functioning of the door (2) where it is closed.

15. Indicator device according to any of the preceding claims, **characterised in that** the light source (17, 18) consists of light emitting diodes.

16. Indicator device according to any of the preceding claims, **characterised in that** the light source (17, 18) consists of two LED arrays.

17. Indicator device according to any of the preceding claims, **characterised in that** the door (2) is of the type with one or two leaves (3, 4) of the sliding type, or of the sliding and swinging type.

18. Indicator device according to any of the preceding claims, **characterised in that** the effect of the light source (17, 18) comprises alternations chosen from the group comprising: blinking, fixed illumination, switching off, to indicate at least one of the following operating phases of the door: the imminence of the opening of the door (2), the possibility of passing through the door (2) without danger, the imminence of the closure of the door (2), the closure of the door (2), malfunctioning of the door (2), the correct functioning of the door (2) when it is closed.

19. Indicator device according to any of the preceding claims, **characterised in that** the effect of the light source (17, 18) is associated with an audible signal reproducing, through the sound, all or some of the effects of the light source (17, 18).

20. A door (2) of a passenger transport means or for access to a passenger transport means, **characterised in that** it is provided with one or more indicator devices according to any of claims 1 to 19, said device or devices indicating, to the passengers inside and outside the transport means, that it is safe to pass between the platform and the transport means.

21. A passenger transport means, **characterised in that** it comprises one or more doors (2) according to claim 20.
